(19) Europäisches Patentamt / European Patent Office / Office européen des brevets

(11) **EP 4 480 715 B1**

(12) **EUROPEAN PATENT SPECIFICATION**

(45) Date of publication and mention of the grant of the patent:
**17.12.2025 Bulletin 2025/51**

(21) Application number: **24172609.0**

(22) Date of filing: **26.04.2024**

(51) International Patent Classification (IPC):
***B60C 3/04*** (2006.01)   ***B60C 11/00*** (2006.01)
***B60C 9/00*** (2006.01)

(52) Cooperative Patent Classification (CPC):
**B60C 11/005; B60C 3/04;** B60C 2009/0078;
B60C 2011/0025

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.06.2023 JP 2023102255**

(43) Date of publication of application:
**25.12.2024 Bulletin 2024/52**

(73) Proprietor: **Sumitomo Rubber Industries, Ltd. Kobe-shi, Hyogo 651-0072 (JP)**

(72) Inventor: **NISHIMURA, Keishi Kobe-shi, 651-0072 (JP)**

(74) Representative: **Manitz Finsterwald Patent- und Rechtsanwaltspartnerschaft mbB Martin-Greif-Straße 1 80336 München (DE)**

(56) References cited:
EP-A1- 3 348 423    EP-A1- 3 882 049
JP-A- H0 399 903    US-A1- 2023 373 250

**Description**

BACKGROUND OF THE INVENTION

Field of the Invention

The present invention relates to a pneumatic tire.

Background Art

In recent years, various kinds of small-size buses intended to transport people or articles in urban areas have been proposed (e.g., see Japanese Laid-Open Patent Publication No. 2021-075088). Such a vehicle is required to ensure a large vehicle cabin space.

A tire mounted to the above-described small-size bus is required to have a reduced outer diameter in order to maximize a vehicle cabin space. On the other hand, since this type of tire receives a high load, excellent wear resistance is required. Further, from the viewpoint of increasing the comfort of the occupant, the tire is also required to provide excellent ride comfort.

A pneumatic tire in accordance with the preamble of claim 1 is known from EP 3 348 423 A1. Related tires are described in US 2023/373250 A1, JP H03 99903 A and EP 3 882 049 A1.

The present invention has been made in view of the above circumstances, and a main object of the present invention is to provide a pneumatic tire which has a specific tire size and has improved wear resistance and ride comfort.

SUMMARY OF THE INVENTION

The object is solved by a tire having the features of claim 1. Sub-claims are directed at specific embodiments of the invention.

The present invention is directed to a pneumatic tire to be mounted and used on a rim. The rim has a rim diameter RD of 12 to 17 inches. A ratio SH/SW of a tire cross-sectional height SH to a tire cross-sectional width SW is 0.30 to 0.45. A ratio RW/SW of a rim width RW of the rim to the tire cross-sectional width SW is 0.78 to 0.99. The pneumatic tire includes a tread portion. The tread portion includes a tread rubber, and a belt layer including two belt plies and disposed inward of the tread rubber in a tire radial direction. The tread rubber includes a cap rubber layer forming a ground-contact surface, and a base rubber layer disposed inward of the cap rubber layer in the tire radial direction. A complex elastic modulus $E^*1$ (MPa) of the cap rubber layer is larger than a complex elastic modulus $E^*2$ (MPa) of the base rubber layer, wherein the complex elastic modulus is a value measured in accordance with the standards of JIS-K6394 under the conditions of Initial strain: 10%, Amplitude: $\pm$2%, Frequency: 10 Hz, Deformation mode: tension and Measurement temperature: 30°C. In the belt plies, a plurality of belt cords having a flexural rigidity M (g·cm) are arranged so as to have a number n of the belt cords per ply width of 5 cm. The complex elastic modulus $E^*1$, the complex elastic modulus $E^*2$, the bending stiffness M, and the number n satisfy a relationship of a following formula (1).

$$M \times n < (E^*1/E^*2) \times 3000 \ldots (1),$$

wherein the bending stiffness M is obtained in a manner in which one end of a test piece of a belt cord of the plurality of belt cords is fixed, a force is applied to the other end of the test piece extending from the fixed end over a length of 50 mm, and resistance is measured when an opening angle becomes 15° at the other end of the test piece.

The pneumatic tire of the present invention has the above-described structure, and thus can improve wear resistance and ride comfort.

According to an embodiment of the invention, each of the plurality of belt cords has a tensile strength T (N), and the complex elastic modulus $E^*1$, the complex elastic modulus $E^*2$, the tensile strength T, and the number n satisfy a relationship of a following formula (2)

$$T \times n < (E^*1/E^*2) \times 35000 \ldots (2),$$

wherein the tensile strength T is obtained by measurement at a tensile speed of 5 cm/min in accordance with a tensile test of (6.4) Load at break and Elongation at break in "Testing methods for steel tire cords" of JIS G3510.

According to an embodiment of the invention, the tensile strength T is 1000 to 2000 N.

According to an embodiment of the invention, an average thickness of the base rubber layer is 5% to 30% of an average thickness of the tread rubber.

According to an embodiment of the invention, the tread portion includes at least one groove, the groove includes a groove bottom and a tread wear indicator protruding locally from the groove bottom, wherein an outer surface, in the tire radial direction, of the base rubber layer is located inward of an outer surface, in the tire radial direction, of the tread wear indicator in the tire radial direction.

According to an embodiment of the invention, the complex elastic modulus $E^*1$ is 8.0 to 15.0 MPa.

According to an embodiment of the invention, the complex elastic modulus $E^*2$ is 4.0 to 9.0 MPa.

According to an embodiment of the invention, each of the plurality of belt cords is a steel cord.

According to an embodiment of the invention, the bending stiffness M is 100 to 300 g·cm.

BRIEF DESCRIPTION OF THE DRAWINGS

FIG. 1 is a transverse cross-sectional view of a pneumatic tire according to one embodiment of the present invention;

FIG. 2 is a perspective view of a vehicle on which the tires of the present invention are mounted;

FIG. 3 is an enlarged cross-sectional view of a tread portion in FIG. 1;

FIG. 4 is an enlarged cross-sectional view of end portions of belt plies in FIG. 3; and

FIG. 5 is an enlarged cross-sectional view of a groove and a tread rubber in FIG. 3.

DETAILED DESCRIPTION

Hereinafter, an embodiment of the present invention will be described with reference to the drawings. The drawings connote the characteristics of the present invention, but may contain exaggerated expressions and expressions that differ from the dimensional ratio of the actual structure in order to help the understanding of the present invention. In addition, the same or common elements are denoted by the same reference characters throughout each embodiment, and the redundant description thereof is omitted. A known configuration can be used as appropriate for a configuration that is not described in the present description.

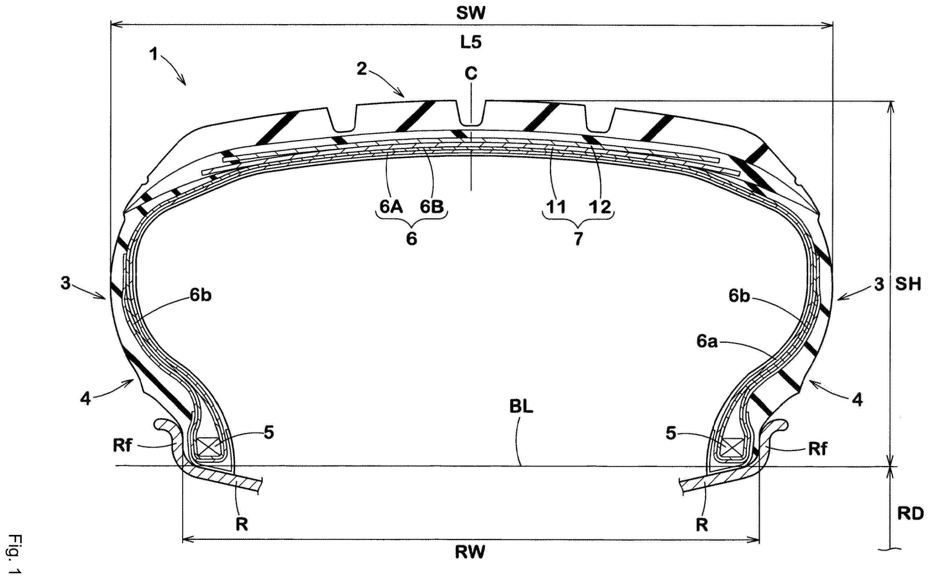

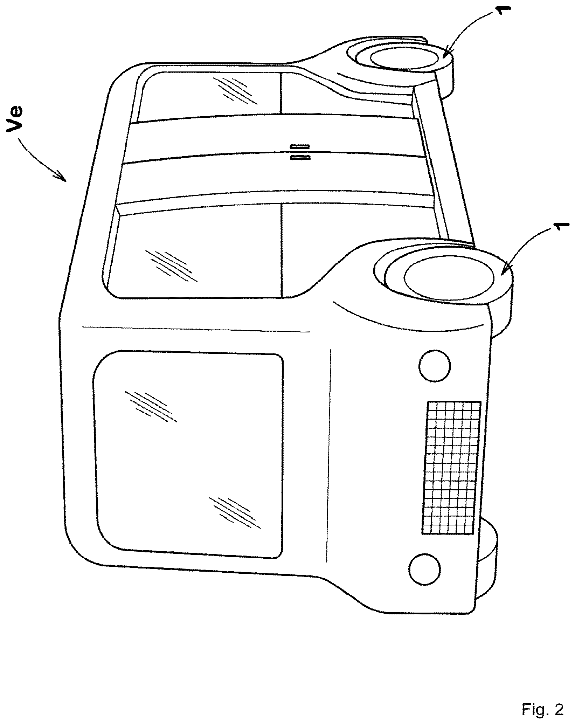

FIG. 1 is a transverse cross-sectional view of a pneumatic tire 1 (hereinafter, may be simply referred to as "tire 1") according to one embodiment of the present invention. FIG. 2 is a perspective view conceptually showing a vehicle Ve on which the tires 1 of the present invention are mounted. As shown in FIG. 1 and FIG. 2, the tire 1 of the present embodiment is mounted and used on a rim R, and is suitably used as a pneumatic tire for the vehicle Ve such as a small-size bus or a small-size shuttle bus, for example.

As shown in FIG. 2, the above-described vehicle Ve is a four-wheel automobile. The vehicle Ve is not limited to a four-wheel one, and may have six wheels or eight wheels. In addition, a predetermined number of the tires 1 are mounted to the vehicle Ve according to the wheel structure.

The vehicle Ve falls under a small-size shuttle bus to be used for transporting people or articles in urban areas, for example. As the small-size shuttle bus, a vehicle having an entire length of 4 m to 7 m, an entire width of about 2 m, and a total vehicle weight of about 3 t is assumed. However, the tire 1 of the present invention may be used for not only the vehicles in the above-described range but also various kinds of vehicles.

The vehicle Ve may be used not only for transportation of people but also for transportation of articles, and may be further used as a mobile store, a mobile office, or the like. The vehicle Ve is preferably an electric automobile having an automatic driving function, for example. In addition, the vehicle Ve is mainly intended for transporting people, articles, and the like in urban areas, and thus is assumed to have a relatively low running speed range (an average speed of about 50 km/h). Thus, importance need not necessarily be placed on wet performance. However, the vehicle Ve is not limited to such a mode.

In the case where the vehicle Ve is an electric automobile, a motor is preferably disposed in a rim. In this case, the vehicle Ve preferably has an independent steering function that allows each wheel to be steered independently. Accordingly, turning or the like is easily performed on the spot, and a vehicle cabin space of the vehicle Ve can be increased.

The tire 1 of the present embodiment to be used for such a vehicle Ve is required to have a high space efficiency. Thus, a rim diameter for the tire 1 is required to be small, or the tire 1 is required to have a small tire cross-sectional height. Meanwhile, the vehicle Ve has a commensurate weight, and thus the tire 1 is also required to have high wear resistance. In addition, the vehicle Ve is also required to provide excellent ride comfort.

FIG. 1 is a transverse cross-sectional view, including a tire rotation axis, of the tire 1 in a standardized state. In the case of a pneumatic tire for which various standards are defined, the "standardized state" refers to a state in which a tire is mounted on a standardized rim and is inflated to a standardized internal pressure and no load is applied to the tire. In the case of a tire for which various standards are not defined, the standardized state means a standard use state, corresponding to the purpose of use of the tire, in which the tire is not mounted on a vehicle and no load is applied to the tire. In the present description, unless otherwise specified, dimensions and the like of components of the tire are values measured in the standardized state. In addition, dimensions of components (e.g., an inner member of the tire 1) that cannot be measured in the standardized state are values measured in a state in which the tire 1 is made to approximate the standardized state as much as possible.

The "standardized rim" refers to a rim that is defined, in a standard system including a standard on which the tire is based, by the standard for each tire, and is, for example, "standard rim" in the JATMA standard, "Design Rim" in the TRA standard, or "Measuring Rim" in the ETRTO standard.

The "standardized internal pressure" refers to an air pressure that is defined, in a standard system including a standard on which the tire is based, by the standard for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The tire 1 includes a tread portion 2, a pair of sidewall portions 3, and a pair of bead portions 4. The sidewall portions 3 are respectively connected to the outer sides of the tread portion 2 in a tire axial direction, and extend in a tire radial direction. The bead portions 4 are respectively connected to the inner sides of the sidewall portions 3 in the tire radial direction. In addition, the tire 1 includes a carcass 6. The carcass 6 extends between the pair of bead portions 4. In other words, the carcass 6 extends from one of the bead portions 4 to the other of the bead portions 4, through one of the sidewall portions 3, the tread portion 2, and the other of the sidewall portions 3.

The carcass 6 includes two carcass plies 6A, 6B, for example. Each carcass ply includes a body portion 6a and turned-up portions 6b, for example. The body portion 6a extends between the pair of bead portions 4, for example. The turned-up portions 6b are connected to the body portion 6a, and are respectively turned up around bead cores 5 from the inner side to the outer side in the tire axial direction.

The carcass plies 6A, 6B each include a plurality of carcass cords and a topping rubber covering the carcass cords (not shown). As the carcass cords, for example, organic fiber cords such as aramid cords and rayon cords are used. The carcass cords are preferably arranged at an angle of 70 to 90° relative to a tire equator C, for example. However, the tire 1 of the present invention is not limited to such a mode.

In the present invention, the rim R has a rim diameter RD of 12 to 17 inches. In addition, a ratio SH/SW of a tire cross-sectional height SH to a cross-sectional width SW of the tire 1 is 0.30 to 0.45. A ratio RW/SW of a rim width RW of the rim R to the cross-sectional width SW of the tire 1 is 0.78 to 0.99. The cross-sectional width SW is, for example, 150 to 250 mm.

The rim diameter RD is an outer diameter of a rim body part to which the bead cores 5 of the bead portions 4 fit. In addition, when projections (not shown) representing patterns or characters are provided on the side walls of the tire 1, the cross-sectional width SW of the tire 1 corresponds to a width obtained by excluding the projections. The cross-sectional height SH of the tire 1 corresponds to 1/2 of the difference between an outer diameter of the tire and the rim diameter RD. In other words, the cross-sectional height SH corresponds to a distance in the tire radial direction from a bead base line BL to an outer end, in the tire radial direction, of the tire 1. The bead base line BL means a tire axial line passing through a rim diameter position.

The rim width RW of the rim R corresponds to a distance in the tire axial direction from an inner surface of one of rim flanges Rf to an inner surface of the other of the rim flanges Rf. In the case where the inner surfaces are inclined, the above-described distance is measured at the center position, in the tire radial direction, of each bead core 5 of the tire 1 mounted on the rim R.

As described above, in the tire 1 of the present invention, the rim diameter RD and the cross-sectional height SH are relatively small, and the rim width RW is relatively large with respect to the tire cross-sectional width SW. For example, such a tire 1 mounted on the above-described vehicle Ve (shown in FIG. 2) allows space efficiency to be enhanced in a vehicle space, and allows, in a vehicle having a motor disposed inside the rim, a sufficient storage space for the motor to be ensured. In addition, such a tire 1 can retain a sufficient air volume for supporting the total weight of the vehicle.

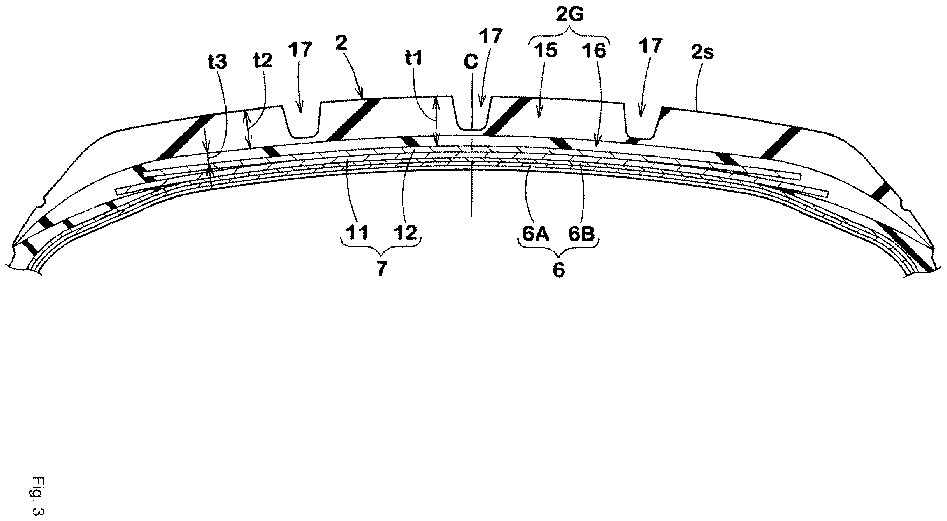

FIG. 3 is an enlarged cross-sectional view of the tread portion 2 of the tire 1 in FIG. 1. As shown in FIG. 3, the tread portion 2 includes a tread rubber 2G, and a belt layer 7 including two belt plies and disposed inward of the tread rubber 2G in the tire radial direction.

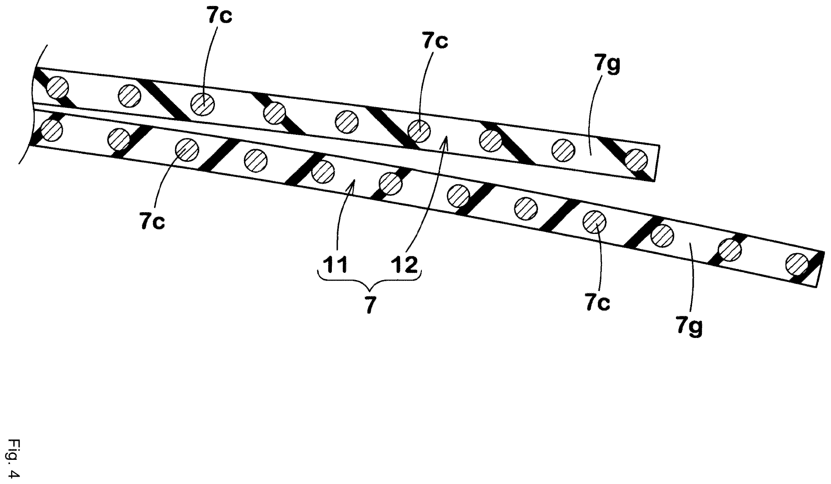

The belt layer 7 of the present embodiment includes a first belt ply 11 adjacent to the carcass 6, and a second belt ply 12 disposed outward of the first belt ply 11 in the tire radial direction. FIG. 4 is an enlarged cross-sectional view of end portions of these belt plies. As shown in FIG. 4, the belt plies include a plurality of belt cords 7c arranged at an angle of 15 to 45° relative to the tire circumferential direction, and a topping rubber 7g covering the belt cords 7c. The belt cords of the first belt ply 11 and the belt cords of the second belt ply 12 are inclined in directions opposite to each other with respect to the tire circumferential direction. Thus, the tread portion 2 is effectively reinforced.

In the first belt ply 11 and the second belt ply 12, the plurality of belt cords 7c having a bending stiffness M (g·cm) are arranged so as to have a number n of the belt cords 7c per ply width of 5 cm. In a preferable mode, in the present embodiment, the plurality of belt cords 7c having substantially the same flexural rigidity M are disposed in the first belt ply 11 and the second belt ply 12. In addition, the belt cords 7c are uniformly disposed in the first belt ply 11 and the second belt ply 12.

The "bending stiffness M" is measured as follows. That is, the belt cord 7c is cut at a length of 70 mm so as not to be untwisted to take a test piece, and the test piece is measured by using, for example, a stiffness tester (Model 150-D) manufactured by TABER INDUSTRIES (USA), whereby the "bending stiffness M" is measured. Specifically, the "bending stiffness M" is obtained in a manner in which one end of the test piece is fixed, a force F is applied to the other end of the test piece extending from the fixed end over a length of 50 mm, and resistance (bending hardness) is measured when an opening angle becomes 15° at the other end of the test piece.

As shown in FIG. 3, the tread rubber 2G includes a cap rubber layer 15 forming a ground-contact surface 2s, and a base rubber layer 16 disposed inward of the cap rubber layer 15 in the tire radial direction. In the present invention, a complex elastic modulus $E*1$ (MPa) of the cap rubber layer 15 is larger than a complex elastic modulus $E*2$ (MPa) of the base rubber layer 16. In the present description, a complex elastic modulus is a value measured in accordance with the standards of JIS-K6394 under the following conditions using a viscoelasticity spectrometer.

Initial strain: 10%
Amplitude: ±2%
Frequency: 10 Hz
Deformation mode: tension
Measurement temperature: 30°C

In the pneumatic tire 1 of the present invention, the complex elastic modulus $E*1$ of the cap rubber layer 15, the complex elastic modulus $E*2$ of the base rubber layer 16, the bending stiffness M of the belt cords 7c, and the number n of the belt cords 7c satisfy a relationship of the following formula (1). Thus, the pneumatic tire of the present invention can improve wear resistance and ride comfort. The reason for this is as follows.

$$M \times n < (E*1/E*2) \times 3000 \dots (1)$$

The inventor of the present invention has found that a product of the bending stiffness M and the number n of the belt cords 7c in the belt layer 7 is largely involved with the stiffness of the tread portion 2, and has a large influence on wear resistance and ride comfort. In addition, the inventor has found that the larger the ratio ($E*1/E*2$) of the complex elastic modulus of the cap rubber layer 15 to the complex elastic modulus of the base rubber layer 16 is, the more the vibration absorption characteristics of the tread portion 2 are improved and the greater the contribution to improvement of ride comfort is. Further, the inventor has focused on the relationship between theses parameters, and has specified the relationship of the above-described formula (1) as a result of various experiments. In the case where this relationship is satisfied, the vibration absorption characteristics of the tread portion 2 are ensured sufficiently with respect to the holding force of the belt layer 7 on the tread portion 2, and wear resistance and ride comfort can be improved.

In the present invention, from the viewpoint of allowing for the variation of each of the above-described parameters (the complex elastic modulus $E*1$, the complex elastic modulus $E*2$, the bending stiffness M, and the number n), the average for each parameter is preferably applied to the formula (1). The "average for each parameter" to be adopted is, for example, a value obtained by sectioning an object to be measured into a plurality of very small areas each having an appropriate size, measuring a corresponding parameter of each very small area, and dividing the total of the obtained parameters of the very small areas, by the number of the very small areas obtained by the sectioning.

Hereinafter, more detailed configurations of the present embodiment will be described. The configurations described below show a specific mode of the present embodiment. Therefore, it is needless to say that the present invention can achieve the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

From the viewpoint of improving wear resistance and ride comfort in a well-balanced manner, "$M \times n$" at the left side of the formula (1) is preferably not less than 40% and more preferably not less than 50% of "$(E*1/E*2) \times 3000$" at the right side of the formula (1), and preferably not more than 80% and more preferably not more than 70% of "$(E*1/E*2) \times 3000$" at the right side of the formula (1).

Each of the plurality of belt cords 7c (shown in FIG. 4) is preferably a steel cord. In addition, the bending stiffness M of the belt cord 7c is preferably not less than 100 g·cm, more preferably not less than 120 g·cm, and even more preferably not less than 130 g·cm, and is preferably not more than 300 g·cm, more preferably not more than 200 g·cm, and even more preferably not more than 190 g·cm. Thus, wear resistance and ride comfort are improved in a well-balanced manner.

The number n of the belt cords 7c per ply width of 5 cm of the belt ply is, for example, 10 to 30 and preferably 23 to 27.

Each of the plurality of belt cords 7c has a tensile strength T (N). The tensile strength T is preferably not less than 1000 N and more preferably not less than 1300 N, and is preferably not more than 2000 N and more preferably not more than 1700 N. Thus, wear resistance and ride comfort are improved in a well-balanced manner. The "tensile strength T" is a maximum load required for breaking a test piece and is obtained by measurement at a tensile speed of 5 cm/min. in accordance with a tensile test of (6.4) Load at break and Elongation at break in "Testing methods for steel tire cords" of JIS G3510.

In a more preferable mode, the complex elastic modulus $E^*1$, the complex elastic modulus $E^*2$, the tensile strength T, and the number n preferably satisfy a relationship of the following formula (2). In the case where this relationship is satisfied, ride comfort can be reliably improved.

$$T \times n < (E^*1/E^*2) \times 35000 \ldots (2)$$

From the viewpoint of improving wear resistance and ride comfort in a well-balanced manner, "$T \times n$" at the left side of the formula (2) is preferably not less than 40% and more preferably not less than 50% of "$(E^*1/E^*2) \times 35000$" at the right side of the formula (2), and is preferably not more than 80% and more preferably not more than 70% of "$(E^*1/E^*2) \times 35000$" at the right side of the formula (2).

The complex elastic modulus $E^*1$ of the cap rubber layer 15 is preferably not less than 8.0 MPa and more preferably not less than 9.0 MPa, and is preferably not more than 15.0 MPa and more preferably not more than 12.0 MPa. In addition, the complex elastic modulus $E^*2$ of the base rubber layer 16 is preferably not less than 4.0 MPa and more preferably not less than 4.5 MPa, and is preferably not more than 9.0 MPa and more preferably not more than 7.0 MPa. Thus, sufficient wear resistance is obtained.

The complex elastic modulus $E^*1$ of the cap rubber layer 15 is preferably 1.5 to 2.5 times and more preferably 1.8 to 2.2 times the complex elastic modulus $E^*2$ of the base rubber layer 16. Thus, separation between the cap rubber layer 15 and the base rubber layer 16 is inhibited, while the above-described effect is exhibited.

An average thickness t2 of the cap rubber layer 15 is preferably 70% to 95% of an average thickness t1 of the tread rubber 2G. An average thickness t3 of the base rubber layer 16 is preferably 5% to 30% of the average thickness t1 of the tread rubber 2G. Thus, wear resistance and ride comfort are improved in a well-balanced manner. The average thickness t1 of the tread rubber 2G corresponds to a value obtained by dividing a cross-sectional area of the tread rubber 2G in a region inward of the ground-contact surface 2s of the tread portion 2 in the tire radial direction, by the length, in the tire axial direction, of the region of the tread rubber 2G. The same applies to the average thickness t2 of the cap rubber layer 15 and the average thickness t3 of the base rubber layer 16.

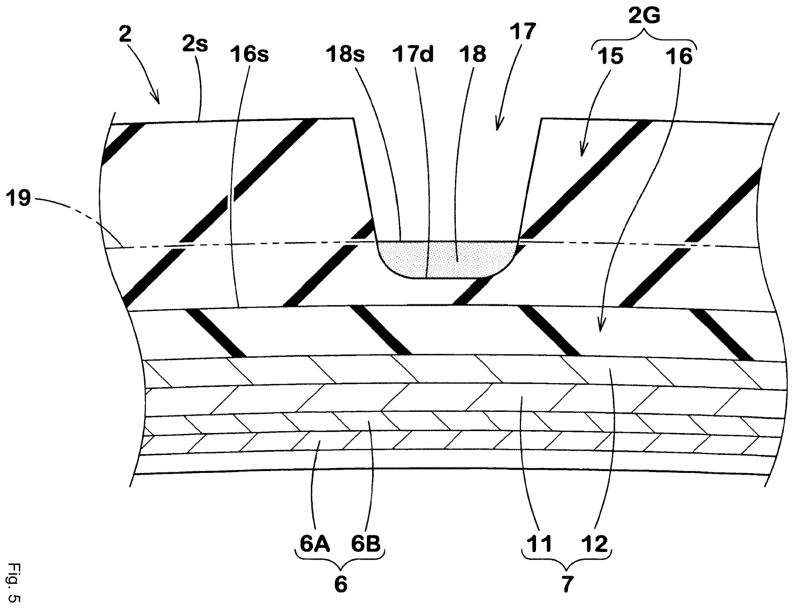

The tread portion 2 includes at least one groove 17. FIG. 5 is an enlarged cross-sectional view of the groove 17 and the tread rubber 2G. As shown in FIG. 5, the groove 17 provided in the tread portion 2 includes a groove bottom 17d, and a tread wear indicator 18 protruding locally from the groove bottom 17d. The tread wear indicator 18 is a small protrusion for indicating the limit of wear in the tread portion 2 and, for example, has a height of 1.6 mm. For easy understanding, the tread wear indicator 18 in FIG. 5 is dotted. In FIG. 1 and FIG. 3, the tread wear indicator 18 is omitted.

In a preferable mode, an outer surface 16s, in the tire radial direction, of the base rubber layer 16 is located tire-radially inward of an outer surface 18s, in the tire radial direction, of the tread wear indicator 18. More specifically, the entire outer surface 16s of the base rubber layer 16 is located inward, in the tire radial direction, of a virtual line 19 extending along the ground-contact surface 2s of the tread portion 2 so as to pass through the outer surface 18s of the tread wear indicator 18. Thus, the cap rubber layer 15 is allowed to form an outer surface of the tread portion 2 until the end of the wear of the tread portion 2, and thus excellent wear resistance is exhibited over a long time.

Although the pneumatic tire according to the embodiment of the present invention has been described above in detail, the present invention is not limited to the above specific embodiment, and various modifications can be made to implement the present invention within the scope of the appended claims.

EXAMPLES

Pneumatic tires having a size of 205/40R15 and having the basic structure shown in FIG. 1 were produced as test tires based on the specifications indicated in Table 1. In addition, as a comparative example, a tire that did not satisfy the above-described formula (1) was produced as a test tire. The tire of the comparative example had substantially the same structure as the tires of the examples except for the above-described matter. Ride comfort and wear resistance were tested for each test tire. The common specifications and the test methods for the test tires are as follows.

Rim on which the tire was mounted: 15×7.0J
Tire internal pressure: 520 kPa

Test vehicle: e-Pallet manufactured by TOYOTA MOTOR CORPORATION

<Ride comfort>

A driver drove the above-described test vehicle having the test tires mounted thereon, and, at that time, sensory evaluation was made by the driver in terms of ride comfort. The results are indicated as scores with the ride comfort of the comparative example being 100. The greater the value is, the more excellent ride comfort is.

<Wear resistance>

Wear energy was measured when running with each test tire was performed on a GPS testing machine. The results were indicated as indexes with the reciprocal of the wear energy of the comparative example being 100. The greater the value is, the smaller wear energy is and the more excellent wear resistance is.

Table 1 indicates the test results.

[Table 1]

|  | Comp. Ex. | Ex. 1 | Ex. 2 | Ex. 3 | Ex. 4 | Ex. 5 | Ex. 6 | Ex. 7 |
|---|---|---|---|---|---|---|---|---|
| Complex elastic modulus $E^*1$ (MPa) of cap rubber layer | 9.7 | 9.7 | 8.0 | 10.0 | 10.0 | 10.0 | 10.0 | 10.0 |
| Complex elastic modulus $E^*2$ (MPa) of base rubber layer | 8.26 | 4.63 | 4.63 | 4.63 | 4.63 | 4.63 | 4.63 | 4.63 |
| Flexural rigidity M (g•cm) of belt cord | 149 | 149 | 149 | 100 | 149 | 149 | 149 | 151 |
| Number n of belt cords | 25.7 | 25.7 | 25.7 | 25.7 | 25.7 | 25.7 | 25.7 | 19.8 |
| Tensile strength T (N) of belt cord | 1650 | 1650 | 1650 | 1650 | 1650 | 1000 | 2000 | 1650 |
| $A=(E^*1/E^*2)\times 3000$ | 3523 | 6285 | 5184 | 6479 | 6479 | 7127 | 7127 | 6479 |
| $B=(E^*1/E^*2)\times 35000$ | 41102 | 73326 | 60475 | 75594 | 75594 | 83153 | 83153 | 75594 |
| $C=M\times n$ | 3829 | 3829 | 3829 | 2570 | 3829 | 3395 | 4644 | 2990 |
| $D=T\times n$ | 42405 | 42405 | 42405 | 42405 | 42405 | 36237 | 42405 | 32670 |
| Ratio C/A | 1.09 | 0.61 | 0.74 | 0.40 | 0.59 | 0.48 | 0.65 | 0.46 |
| Ratio D/B | 1.03 | 0.58 | 0.70 | 0.56 | 0.56 | 0.44 | 0.51 | 0.43 |
| Ride comfort (score) | 100 | 106 | 105 | 109 | 106 | 109 | 105 | 109 |
| Wear resistance (index) | 100 | 105 | 104 | 105 | 104 | 105 | 105 | 105 |

[Table 2]

|  | Ex. 8 | Ex. 9 | Ex. 10 | Ex. 11 | Ex. 12 | Ex. 13 | Ex. 14 |
|---|---|---|---|---|---|---|---|
| Complex elastic modulus $E^*1$ (MPa) of cap rubber layer | 11.0 | 11.0 | 11.0 | 11.0 | 15.0 | 10.0 | 10.6 |
| Complex elastic modulus $E^*2$ (MPa) of base rubber layer | 4.63 | 4.63 | 4.63 | 4.63 | 4.63 | 6 | 8.26 |
| Bending stiffness M (g·cm) of belt cord | 132 | 151 | 181 | 300 | 149 | 149 | 149 |
| Number n of belt cords | 26 | 25.7 | 26 | 23.0 | 25.7 | 25.7 | 25.7 |
| Tensile strength T (N) of belt cord | 1410 | 1410 | 1650 | 1650 | 1650 | 1650 | 1650 |
| $A=(E^*1/E^*2)\times 3000$ | 7127 | 7127 | 7127 | 7127 | 9719 | 5000 | 3850 |
| $B=(E^*1/E^*2)\times 35000$ | 83153 | 83153 | 83153 | 83153 | 113391 | 58333 | 44915 |
| $C=M\times n$ | 3395 | 3881 | 4644 | 6900 | 3829 | 3829 | 3829 |

(continued)

|  | Ex. 8 | Ex. 9 | Ex. 10 | Ex. 11 | Ex. 12 | Ex. 13 | Ex. 14 |
|---|---|---|---|---|---|---|---|
| D=T×n | 36237 | 36237 | 42405 | 37950 | 42405 | 42405 | 42405 |
| Ratio C/A | 0.48 | 0.54 | 0.65 | 0.97 | 0.39 | 0.77 | 0.99 |
| Ratio D/B | 0.44 | 0.44 | 0.51 | 0.46 | 0.37 | 0.73 | 0.94 |
| Ride comfort (score) | 109 | 108 | 106 | 102 | 110 | 104 | 101 |
| Wear resistance (index) | 106 | 106 | 106 | 106 | 107 | 103 | 102 |

If the ratio C/A shown in Tables 1 and 2 is smaller than 1, a relationship of the above-described formula (1) is satisfied. In addition, if the ratio D/B shown in Tables 1 and 2 is smaller than 1, a relationship of the above-described formula (2) is satisfied. As shown in Tables 1 and 2, the tire of each example has significantly improved wear resistance and ride comfort. That is, in the present invention, it is confirmed that the specific tire size allows improvement of wear resistance and ride comfort.

**Claims**

1. A pneumatic tire (1) to be mounted and used on a rim (R), wherein

   a ratio (SH/SW) of a tire cross-sectional height (SH) to a tire cross-sectional width (SW) is 0.30 to 0.45,
   the pneumatic tire (1) includes a tread portion (2),
   the tread portion (2) includes a tread rubber (2G), and a belt layer (7) including two belt plies (11, 12) and disposed inward of the tread rubber (2G) in a tire radial direction,
   the tread rubber (2G) includes a cap rubber layer (15) forming a ground-contact surface (2s), and a base rubber layer (16) disposed inward of the cap rubber layer (15) in the tire radial direction,
   a complex elastic modulus (E*1) (MPa) of the cap rubber layer (15) is larger than a complex elastic modulus (E*2) (MPa) of the base rubber layer (16), wherein the complex elastic modulus is a value measured in accordance with the standards of JIS-K6394 under the conditions of Initial strain: 10%, Amplitude: ±2%, Frequency: 10 Hz, Deformation mode: tension and Measurement temperature: 30°C, and
   in the belt plies (11, 12), a plurality of belt cords (7c) having a bending stiffness (M) (g·cm) are arranged so as to have a number (n) of the belt cords (7c) per ply width of 5 cm, wherein the bending stiffness (M) is obtained in a manner in which one end of a test piece of a belt cord of the plurality of belt cords (7c) is fixed, a force is applied to the other end of the test piece extending from the fixed end over a length of 50 mm, and resistance is measured when an opening angle becomes 15° at the other end of the test piece,
   **characterized in that**
   the pneumatic tire (1) is to be mounted and used on a rim (R) having a rim diameter (RD) of 12 to 17 inches, and a ratio (RW/SW) of a rim width (RW) of the rim (R) to the tire cross-sectional width (SW) is 0.78 to 0.99, and
   the complex elastic modulus (E*1), the complex elastic modulus (E*2), the bending stiffness (M), and the number (n) satisfy a relationship of a following formula (1).

$$M{\times}n<(E^*1/E^*2){\times}3000\ldots(1)$$

2. The pneumatic tire (1) according to claim 1, wherein

   each of the plurality of belt cords (7c) has a tensile strength (T) (N), and
   the complex elastic modulus (E*1), the complex elastic modulus (E*2), the tensile strength (T), and the number (n) satisfy a relationship of a following formula (2)

$$T{\times}n<(E^*1/E^*2){\times}35000\ldots(2),$$

   wherein the tensile strength (T) is obtained by measurement at a tensile speed of 5 cm/min in accordance with a tensile test of (6.4) Load at break and Elongation at break in "Testing methods for steel tire cords" of JIS G3510.

3. The pneumatic tire (1) according to claim 2, wherein the tensile strength (T) is 1000 to 2000 N.

4. The pneumatic tire (1) according to any one of claims 1 to 3, wherein an average thickness (t3) of the base rubber layer (16) is 5% to 30% of an average thickness (t1) of the tread rubber (2G).

5. The pneumatic tire (1) according to any one of claims 1 to 4, wherein

the tread portion (2) includes at least one groove (17),
the groove (17) includes a groove bottom (17d), and a tread wear indicator (18) protruding locally from the groove bottom (17d), and
an outer surface (16s), in the tire radial direction, of the base rubber layer (16) is located inward of an outer surface (18s), in the tire radial direction, of the tread wear indicator (18) in the tire radial direction.

6. The pneumatic tire (1) according to any one of claims 1 to 5, wherein the complex elastic modulus (E*1) is 8.0 to 15.0 MPa.

7. The pneumatic tire (1) according to any one of claims 1 to 6, wherein the complex elastic modulus (E*2) is 4.0 to 9.0 MPa.

8. The pneumatic tire (1) according to any one of claims 1 to 7, wherein each of the plurality of belt cords (7c) is a steel cord.

9. The pneumatic tire (1) according to claim 8, wherein the bending stiffness (M) is 100 to 300 g·cm.


**Patentansprüche**

1. Luftreifen (1), der auf eine Felge (R) aufzuziehen und auf dieser zu verwenden ist, wobei

ein Verhältnis (SH/SW) einer Reifenquerschnittshöhe (SH) zu einer Reifenquerschnittsbreite (SW) 0,30 bis 0,45 beträgt,
der Luftreifen (1) einen Laufflächenabschnitt (2) aufweist,
der Laufflächenabschnitt (2) einen Laufflächengummi (2G) und eine Gürtelschicht (7) aufweist, die zwei Gürtellagen (11, 12) aufweist und in einer Reifenradialrichtung innen von dem Laufflächengummi (2G) angeordnet ist,
der Laufflächengummi (2G) eine Deckgummischicht (15), die eine Bodenkontaktfläche (2s) bildet, und eine Basisgummischicht (16) aufweist, die in der Reifenradialrichtung innen von der Deckgummischicht (15) angeordnet ist,
ein komplexer Elastizitätsmodul (E*1) (MPa) der Deckgummischicht (15) größer ist als ein komplexer Elastizitätsmodul (E*2) (MPa) der Basisgummischicht (16), wobei der komplexe Elastizitätsmodul ein Wert ist, der gemäß den Normen von JIS-K6394 unter den Bedingungen Anfangsdehnung: 10%, Amplitude: ±2%, Frequenz: 10 Hz, Verformungsmodus: Zug und Messtemperatur: 30°C gemessen ist, und
in den Gürtellagen (11, 12) mehrere Gürtelkorde (7c) mit einer Biegesteifigkeit (M) (g·cm) so angeordnet sind, dass eine Anzahl (n) der Gürtelkorde (7c) pro Lagenbreite von 5 cm vorliegt, wobei die Biegesteifigkeit (M) in einer Weise erhalten wird, in der ein Ende eines Teststücks eines Gürtelkordes der mehreren Gürtelkorde (7c) fixiert wird, eine Kraft auf das andere Ende des Teststücks ausgeübt wird, das sich von dem fixierten Ende über eine Länge von 50 mm erstreckt, und ein Widerstand gemessen wird, wenn ein Öffnungswinkel an dem anderen Ende des Teststücks 15° wird,
**dadurch gekennzeichnet, dass**
der Luftreifen (1) auf eine Felge (R) aufzuziehen und auf dieser zu verwenden ist, die einen Felgendurchmesser (RD) von 12 bis 17 Zoll aufweist, und ein Verhältnis (RW/SW) einer Felgenbreite (RW) der Felge (R) zu der Reifenquerschnittsbreite (SW) 0,78 bis 0,99 beträgt, und
der komplexe Elastizitätsmodul (E*1), der komplexe Elastizitätsmodul (E*2), die Biegesteifigkeit (M) und die Anzahl (n) eine Beziehung der folgenden Formel (1) erfüllen.

$$M \times n < (E*1/E*2) \times 3000 ...(1)$$

2. Luftreifen (1) nach Anspruch 1, wobei

jeder der mehreren Gürtelkorde (7c) eine Zugfestigkeit (T) (N) aufweist, und

der komplexe Elastizitätsmodul (E*1), der komplexe Elastizitätsmodul (E*2), die Zugfestigkeit (T) und die Anzahl (n) eine Beziehung der folgenden Formel (2) erfüllen

$$T \times n < (E*1/E*2) \times 35000...(2),$$

wobei die Zugfestigkeit (T) durch Messung bei einer Zuggeschwindigkeit von 5 cm/min gemäß einem Zugtest von (6.4) Bruchlast und Bruchdehnung in "Testing methods for steel tire cord" von JIS G3510 erhalten wird.

3.  Luftreifen (1) nach Anspruch 2, wobei die Zugfestigkeit (T) 1000 bis 2000 N beträgt.

4.  Luftreifen (1) nach einem der Ansprüche 1 bis 3, wobei eine durchschnittliche Dicke (t3) der Basisgummischicht (16) 5 % bis 30 % einer durchschnittlichen Dicke (t1) des Laufflächengummis (2G) beträgt.

5.  Luftreifen (1) nach einem der Ansprüche 1 bis 4, wobei

    der Laufflächenabschnitt (2) mindestens eine Rille (17) aufweist,
    die Rille (17) einen Rillenboden (17d) und einen Laufflächenverschleißanzeiger (18) aufweist, der lokal von dem Rillenboden (17d) vorsteht, und
    eine Außenfläche (16s) der Basisgummischicht (16) in der Reifenradialrichtung innen von einer Außenfläche (18s) des Laufflächenverschlei-ßindikators (18) in der Reifenradialrichtung in der Reifenradialrichtung angeordnet ist.

6.  Luftreifen (1) nach einem der Ansprüche 1 bis 5, wobei der komplexe Elastizitätsmodul (E*1) 8,0 bis 15,0 MPa beträgt.

7.  Luftreifen (1) nach einem der Ansprüche 1 bis 6, wobei der komplexe Elastizitätsmodul (E*2) 4,0 bis 9,0 MPa beträgt.

8.  Luftreifen (1) nach einem der Ansprüche 1 bis 7, wobei jeder der mehreren Gürtelkorde (7c) ein Stahlkord ist.

9.  Luftreifen (1) nach Anspruch 8, wobei die Biegesteifigkeit (M) 100 bis 300 g·cm beträgt.


**Revendications**

1.  Bandage pneumatique (1) devant être monté et utilisé sur une jante (R), dans lequel

    un rapport (SH/SW) d'une hauteur de section transversale du pneumatique (SH) sur une largeur de section transversale du pneumatique (SW) est de 0,30 à 0,45,
    le bandage pneumatique (1) inclut une portion formant bande de roulement (2),
    la portion formant bande de roulement (2) inclut un caoutchouc de bande de roulement (2G), et une couche de ceinture (7) incluant deux nappes de ceinture (11, 12) et disposée à l'intérieur du caoutchouc de bande de roulement (2G) dans une direction radiale du pneumatique,
    le caoutchouc de bande de roulement (2G) inclut une couche de caoutchouc de chape (15) formant une surface de contact au sol (2s), et une couche de caoutchouc de base (16) disposée à l'intérieur de la couche de caoutchouc de chape (15) dans la direction radiale du pneumatique,
    un module d'élasticité complexe (E*1) (MPa) de la couche de caoutchouc de chape (15) est supérieur à un module d'élasticité complexe (E*2) (MPa) de la couche de caoutchouc de base (16), le module d'élasticité complexe étant une valeur mesurée en accord avec les standards de la norme industrielle japonaise JIS-K6394 dans les conditions suivantes : contrainte initiale de 10 %, amplitude de ± 2 %, fréquence de 10 Hz, mode de déformation en traction, et température de mesurage de 30 °C, et
    dans les nappes de ceinture (11, 12), une pluralité de câblés de ceinture (7c) ayant une rigidité à la flexion (M) (g·cm) sont agencés de façon à avoir un nombre (n) de câblés de ceinture (7c) par largeur de nappe de 5 cm, la rigidité à la flexion (M) étant obtenue de telle manière qu'une extrémité d'une pièce d'essai d'un câblé de ceinture de la pluralité de câblés de ceinture (7c) est fixée, une force est appliquée sur l'autre extrémité de la pièce d'essai en extension depuis l'extrémité fixe sur une longueur de 50 mm, et une résistance est mesurée quand un angle d'ouverture devient égal à 15° au niveau de l'autre extrémité de la pièce d'essai,
    **caractérisé en ce que**

le bandage pneumatique (1) doit être monté et utilisé sur une jante (R) ayant un diamètre de jante (RD) de 12 à 17 pouces, et un rapport (RW/SW) d'une largeur de jante (RW) de la jante (R) sur la largeur de section transversale du pneumatique (SW) est de 0,78 à 0,99, et

le module d'élasticité complexe (E*1), le module d'élasticité complexe (E*2), la rigidité à la flexion (M), et le nombre (n) satisfont à une relation de formule (1) suivante :

$$M×n<(E*1/E*2)×3000 \quad (1).$$

2. Bandage pneumatique (1) selon la revendication 1, dans lequel

chacun de la pluralité de câblés de ceinture (7c) a une force de traction (T) (N), et
le module d'élasticité complexe (E*1), le module d'élasticité complexe (E*2), la résistance à la traction (T), et le nombre (n) satisfont à une relation de formule (2) suivante :

$$T×n<(E*1/E*2)×35000 \quad (2),$$

dans lequel la résistance à la traction (T) est obtenue par mesurage à une vitesse de traction de 5 cm/min conformément à un essai de traction selon (6.4) Load at break and Elongation at break (charge à la rupture et allongement à la rupture) dans « Testing methods for steel tire cords » (méthodes d'essai pour câblés de pneumatique en acier) selon JIS G3510.

3. Bandage pneumatique (1) selon la revendication 2, dans lequel la résistance à la traction (T) est de 1 000 à 2 000 N.

4. Bandage pneumatique (1) selon l'une quelconque des revendications 1 à 3, dans lequel une épaisseur moyenne (t3) de la couche de caoutchouc de base (16) est de 5 % à 30 % d'une épaisseur moyenne (t1) du caoutchouc de bande de roulement (2G).

5. Bandage pneumatique (1) selon l'une quelconque des revendications 1 à 4, dans lequel

la portion formant bande de roulement (2) inclut au moins une rainure (17), la rainure (17) inclut un fond de rainure (17d), et un indicateur d'usure de bande de roulement (18) se projetant localement depuis le fond de rainure (17d), et
une surface extérieure (16s), dans la direction radiale du pneumatique, de la couche de caoutchouc de base (16) est située à l'intérieur d'une surface extérieure (18s), dans la direction radiale du pneumatique, de l'indicateur d'usure de bande de roulement (18) dans la direction radiale du pneumatique.

6. Bandage pneumatique (1) selon l'une quelconque des revendications 1 à 5, dans lequel le module d'élasticité complexe (E*1) est de 8,0 à 15,0 MPa.

7. Bandage pneumatique (1) selon l'une quelconque des revendications 1 à 6, dans lequel le module d'élasticité complexe (E*2) est de 4,0 à 9,0 MPa.

8. Bandage pneumatique (1) selon l'une quelconque des revendications 1 à 7, dans lequel chacun de la pluralité de câblés de ceinture (7c) est un câblé en acier.

9. Bandage pneumatique (1) selon la revendication 8, dans lequel la rigidité à la flexion (M) est de 100 à 300 g·cm.

Fig. 1

Fig. 2

Fig. 3

Fig. 4

Fig. 5

**EP 4 480 715 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021075088 A
- EP 3348423 A1
- US 2023373250 A1
- JP H0399903 A
- EP 3882049 A1